# EUROPÄISCHE PATENTSCHRIFT

(11) **EP 3 117 720 B1**
(45) Veröffentlichungstag und Bekanntmachung des Hinweises auf die Patenterteilung: **20.02.2019**
(21) Anmeldenummer: 15169994.9
(22) Anmeldetag: 29.05.2015
(51) Int. Cl.: B01J 2/16, A23L 27/00, A23P 10/20

(54) **GROSSE AGGLOMERATPARTIKEL**
BIG AGGLOMERATION PARTICLES
PARTICULES D'AGGLOMERATION GRANCES

(43) Veröffentlichungstag der Anmeldung: 18.01.2017
(73) Patentinhaber: Symrise AG, 37603 Holzminden (DE)
(72) Erfinder: Weißbrodt, Jenny, 37603 Holzminden (DE); Diring, Alexander, 37603 Holzminden (DE); Gruber, Eric, 37603 Holzminden (DE); Rabe, Burghard, 37627 Stadtoldendorf (DE); Sabater, Christopher, 37603 Holzminden (DE); Bröckel, Walter, 37639 Bevern (DE)
(74) Vertreter: Fabry, Bernd

(56) Entgegenhaltungen:
- DE-A1- 2 050 356
- DE-A1-102004 024 680
- GB-A- 1 486 768
- US-A- 5 130 156
- JINAPONG ET AL: "Production of instant soymilk powders by ultrafiltration, spray drying and fluidized bed agglomeration", JOURNAL OF FOOD ENGINEERING, BARKING, ESSEX, GB, Bd. 84, Nr. 2, 7. August 2007 (2007-08-07) , Seiten 194-205, XP022188246, ISSN: 0260-8774, DOI: 10.1016/J.JFOODENG.2007.04.032
- KINI H ET AL: "Effect of particle size and mass on nano to micron particle agglomeration", SICE 2004 ANNUAL CONFERENCE, IEEE, PISCATAWAY, NJ, USA, Bd. 3, 4. August 2004 (2004-08-04), Seiten 1923-1926, XP010824778, ISBN: 978-4-907764-22-7
- PARVEEN FLORA ET AL: "Effect of particle size, liquid content and location on the stability of agglomerates in a fluidized bed", POWDER TECHNOLOGY, ELSEVIER SEQUOIA, LAUSANNE, CH, Bd. 237, 20. Dezember 2012 (2012-12-20), Seiten 376-385, XP028991152, ISSN: 0032-5910, DOI: 10.1016/J.POWTEC.2012.12.021
- R. A. Buffo ET AL: "Effects of agglomeration on the properties of spray-dried encapsulated flavours", FLAVOUR AND FRAGRANCE JOURNAL., vol. 17, no. 4, 1 January 2002 (2002-01-01), pages 292-299, XP0055402742, GB ISSN: 0882-5734, DOI: 10.1002/ffj.1098
- "Kombinierte Systeme für Sprühtrocknung und Agglomeration" In: H.P. Schuchmann, H.Schuchmann: "Lebensmittelverfahrenstechnik", 2005, Wiley-VCH pages 156-157,

## Beschreibung

### GEBIET DER ERFINDUNG

Die Erfindung befindet sich auf dem technischen Gebiet von Partikeln, insbesondere betrifft die Erfindung ein Verfahren zur Herstellung von großen Agglomeratpartikeln.

### STAND DER TECHNIK

Große Partikel sind für die Anwendung im Nahrungsmittelbereich ein wichtiges Produkt. So werden beispielsweise Aromen in Partikelform, z.B. in Teebeuteln zur Abrundung des Geschmacksprofils dem Lebensmittel zugesetzt. Große Partikel, in Form von großen Agglomeratpartikeln sind zumeist mit Verfahren herstellbar, die in der Herstellung teuer sind, oder die nur geringere Beladungen bis ca. 6 % erlauben.

Die Sprühtrocknung stellt ein gängiges Verfahren für die Herstellung von Partikeln im Lebensmittelbereich dar, das zudem eine hohe Beladung der getrockneten Partikel bis 30 % erlaubt. Ein Nachteil der Sprühtrocknung ist die begrenzte Partikelgröße, die sich im Rahmen von ca. 70 - 100 µm bewegt.

Solch ein Verfahren wird beispielsweise in der wissenschaftlichen Publikation von R.A. Buffo et al: "Effects of agglomeration on the properties of spray-dried encapsulated flavours", FLAVOUR AND FRAGRANCE JOURNAL, Bd. 17, Nr. 4, 1. Januar 2002 (2002-01-01), Seiten 292-299. behandelt. Das Dokument offenbart die Herstellung von Agglomeratpartikeln, wobei pulvrige Partikel mittels Sprühtrocknung getrocknet und dann unter Zugabe von Aromenlösungen agglomeriert werden.

Durch die Sprühbetttrocknung lassen sich beispielsweise größere Partikel erzeugen, deren Grenze jedoch bei etwa 200 µm liegt. Werden mit diesem Verfahren größere Partikel hergestellt, sind sie in der Regel mechanisch instabil und überstehen Mischprozesse, Transport und Dosage nicht ohne großen Abrieb und somit Bildung von Feinstaub.

Daher bestand die Aufgabe der vorliegenden Erfindung darin, Agglomeratpartikel mit einer durchschnittlichen Größe zwischen 300 µm und 1.000 µm bereitzustellen. Die Agglomeratpartikeln sollen toxikologisch unbedenklich für den Nahrungsmittelbereich sein. Zudem war es Aufgabe der vorliegenden Erfindung Agglomeratpartikel bereitzustellen, die stabil sind, in der Applikation eine gute Löslichkeit und geringe Staubwerte aufweisen. Ebenfalls war es Aufgabe der vorliegenden Erfindung Agglomeratpartikel bereitzustellen, die eine hohe Beladung an Wirksubstanzen, wie beispielsweise Aromen, aufweisen. Hierbei sollen die Wirksubstanzen (Aromen) im Agglomeratpartikel so eingearbeitet sein, dass sie nicht vorzeitig freigesetzt werden oder sich vor der Endanwendung verflüchtigen.

### BESCHREIBUNG DER ERFINDUNG

Gegenstand der vorliegenden Erfindung ist daher ein Verfahren zur Herstellung von Agglomeratpartikeln mit einer durchschnittlichen Größe zwischen 300 µm und 1.000 µm umfassend die Schritte
(i) Herstellen von pulvrigen Partikeln mittels einer Sprühtrocknung, in einem Sprühtrocknungs-Agglomerationsvorrichtung mit einem Sprühtrocknungsabschnitt (A) im oberen Bereich einer Kammer zum Trocknen von Beschickungsflüssigkeit, die von einem Beschickungsflüssikeitszerstäuber (Z1) gesprüht werden,
(ii) Besprühen der pulvrigen Partikeln mit einer Binderflüssigkeit,
in einem integriertem Fließbett (B) im Sprühtrocknungs-Agglomerationsvorrichtung, das sich im unteren Bereich einer Kammer befindet, in dem das Pulver vom Sprühtrocknungsabschnitt aus Schritt (i) mittels einer Düsen- oder Zerstäuberkonstruktion (Z2), das unten am Fließbett (B) angebracht ist, mit einer Binderflüssigkeit besprüht wird, wobei die Partikel während der Herstellung ständig in Bewegung gehalten und aufgewirbelt werden.

Überraschenderweise wurde gefunden, dass die so hergestellten Agglomeratpartikeln besonders groß werden. Weiterhin zeigte es sich, dass die so erhältlichen Agglomeratpartikeln einen festen Kern aufweist und demgemäß die erfindungsgemäß erhältlichen Agglomeratpartikeln geringe Staubwerte und Abriebwerte aufweisen. Insbesondere ermöglicht die Zirkulation, die die Partikel ständig in Bewegung hält, eine große Kollisionswahrscheinlichkeit der Partikeln untereinander.

Anstatt die Agglomeration durch eine Pulverrückführung in den Prozess zu realisieren, wird eine Agglomeration ausschließlich im Fließbett durch die zusätzliche Einspeisung von geeigneten Binderflüssigkeiten erreicht. Überraschenderweise wurde gefunden, dass die so hergestellten Agglomeratpartikeln besonders groß werden. Es hat sich zudem gezeigt, dass die Integration einer Düsen- oder Zerstäuberkonstruktion (Z2), das unten am Fließbett (B) angebracht ist, besonders vorteilhaft zum Versprühen der Binderflüssigkeit ist. Es zeigte sich zudem, dass die ständige Zirkulation die Kollisionswahrscheinlichkeit der Partikel so begünstigt, dass in einem kurzen Zeitraum, große Agglomeratpartikel entstehen.

In einer bevorzugten Ausführungsform besteht die Düsen- oder Zerstäuberkonstruktion (Z1) im internen Fließbett (B) aus einer Anordnung aus mehreren einzeln angeordneten Düsen, die alle jeweils einzeln an eine Speiseleitung angeschlossen sind, aus der Binderflüssigkeit bzw. jede mögliche Flüssigkeit, die im Agglomerationsprozess benötigt wird versprüht wird. Die Speiseleitung ermöglicht zudem, dass jede Düse individuell mit jeder zu versprühenden Flüssigkeit belegt werden kann, so dass, je nachdem welche Agglomeratpartikel benötigt werden, die Zusammensetzung entsprechend hergestellt werden kann. Die Anzahl der Düsen kann abhängig von der Größe des Sprühturms und vom Produkt bzw. der zu erreichenden Produktqualität von 1 bis zu 12 Düsen verändert werden. Die Düsen können einzeln so eingestellt werden, dass Tröpfchenverteilungen der eingesprühten Binderflüssigkeit von einem sehr feinen Nebel bis hin zu relativ großen Tropfen erreicht werden. Dies wird erreicht durch Variation der Kappenstellung an den Düsen und die Variation des Zerstäubungsdruckes von 1-6 bar.

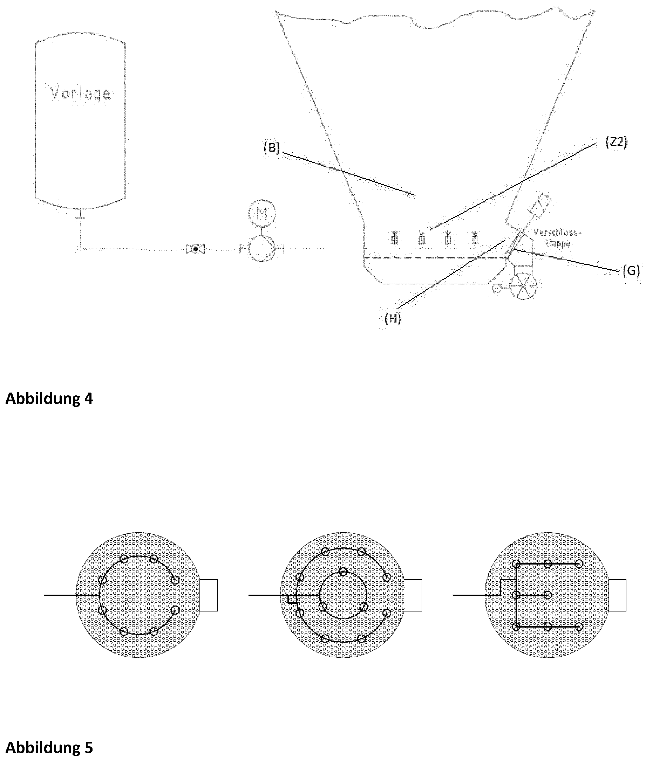

Insbesondere besteht in einer bevorzugte Ausführungsform die Düsen- oder Zerstäuberkonstruktion (Z2) im internen Fließbett (B), aus einer Ringleitung, entlang der Ringleitung in gleichmäßigen Abständen Düsen oder Zerstäuber platziert sind. Eine solche Konstruktion ist beispielhaft in Abbildung 4 wiedergegeben.

In einer weiteren bevorzugten Ausführungsform ist die Düsen- oder Zerstäuberkonstruktion (Z2) eine konzentrische Ringleitung oder eine gitterartige Konstruktion mit Düsen oder Zerstäubern. Ein wichtiger Aspekt ist die Gleichmäßigkeit der angebrachten Düsen- bzw. Zerstäuber. Bei der hier vorliegende beschriebene Düsen- oder Zerstäuberkonstruktion (Z2) können die Düsen bzw. Zerstäuber einzeln reguliert werden, so können z.B. Düsen- bzw. Zerstäuberdruck einzeln reguliert und eingestellt werden.

Diese Konstruktion weist den Vorteil auf, dass die im Fließbett zirkulierenden Partikeln mit einer großen Menge an Feuchtigkeit benetzt werden kann. Zudem unterstützt eine solche Ausgestaltung der Düsen- oder Zerstäuberkonstruktion (Z2) im internen Fließbett (B) die Fluidisierung, was ein Vorteil ist, um große Agglomeratpartikel zu erhalten.

In einer weiteren bevorzugten Ausführungsform umfasst die Düsen- oder Zerstäuberkonstruktion (Z2) mindestens 1 oder 2 oder 3 Düsen oder Zerstäuber, wobei die Düsen bzw. Zerstäuber, vorzugswiese wie oben beschrieben angeordnet sind und beispielhaft in Abbildung 4 wiedergeben sind.

In einer weiteren bevorzugten Ausführungsform umfasst die Düsen- oder Zerstäuberkonstruktion (Z2) mindestens 4 Düsen- oder Zerstäuber, wobei die Düsen bzw. Zerstäuber, vorzugswiese wie oben beschrieben angeordnet sind und beispielhaft in Abbildung 4 wiedergeben sind.

Die Menge an Binderflüssigkeit, die durch die so konstruierten Düsen bzw. Düsenanzahl auf ein Partikel einwirken kann, ermöglicht eine optimale Feuchtigkeitsaufnahme der Partikel. Die Partikel adsorbieren die Flüssigkeit dadurch besser. Durch die Prozessführung, insbesondere die Temperatur und Luftgeschwindigkeit im Fließbett, trocknen die Oberflächen der Partikel nur sehr langsam ab, bleiben also lange klebrig. Die so erhaltenen vergrößerten Haftflächen führen zu einer verstärkten Agglomeration der fluidisierten Partikel im Vergleich zu herkömmlichen Prozessen. Dadurch ergeben sich sehr große Agglomeratpartikel, die durch die vergrößerten Haftflächen auch eine erhöhte mechanische Stabilität aufweisen.

Die Kontaktfläche der zirkulierenden Partikeln zueinander wird dadurch nochmals vergrößert, und führt so zu einer Vergrößerung der Kontaktflächen der Partikeln, so dass sich schnell große Agglomeratpartikel ausbilden.

In einer weiteren bevorzugten Ausführungsform ist die Düsen- oder Zerstäuberkonstruktion (Z2) so konstruiert, dass die Binderflüssigkeit aus der Düsen- oder Zerstäuberkonstruktion (Z2) im internen Fließbett (B) von unten nach oben versprüht wird.

Die Konstruktion der Düsen- oder Zerstäuber in der erfindungsgemäßen Vorrichtung unterstützt insbesondere die Aufwärtsströmung der Partikel im Fließbett und so auch die Verteilung der Partikel im Fließbett, die dazu führt, dass die Wirbelschicht nicht kollabiert, sobald die Partikeln eine Größe von über 200 µm erreichen. Insbesondere ermöglicht die Zirkulation, die die Partikel ständig in Bewegung hält, eine große Kollisionswahrscheinlichkeit der Partikeln untereinander.

In einer weiteren bevorzugten Ausführungsform sind die Düsen oder Zerstäuber bei der Düsen- oder Zerstäuberkonstruktion (Z2) Drucksprühdüsen, vorzugsweise sind es Zweifluid-Sprühdüsen. Die Zerstäubung in der Wirbelschicht erfolgt vorzugsweise mit Zweistoffdüsen. Zweistoffdüsen bieten den Vorteil, dass sie sich durch den Zerstäubungsdruck selbst reinigen. Sie setzen sich daher während der Produktion nicht zu, was in der mit Produkt gefüllten Wirbelschicht leicht passieren könnte. Vorzugsweise werden Druckdüsen mit Wirbelkörper verwendet. Bevorzugt weisen die Düsen bzw. Zerstäuber einen Bohrungsdurchmesser ø von 0,5 bis 1,5 mm, vorzugsweise 0,7 bis 1,0 mm auf. Zweifluid-Sprühdüsen sind besonders vorteilhaft, da sie es ermöglichen zwei unterschiedliche Flüssigkeiten und/oder Gase durch die Düsen zu blasen bzw. ins Fließbett einzublasen. Demgemäß werden vorzugsweise Zweifluiddüsen verwendet, da die durch die Zweistoffdüsen eingebrachte Luft, die Aufwärtsströmung der Partikel fördert.

Die im Fließbett (B) befindlichen Düsen (Z2) werden einzeln mit Druckluft versorgt, die jeweils durch einen Druckminderer geregelt wird (Regel Bereich von 0-10 bar). Die Produkt- und Druckluftleitungen bestehen vorzugsweise aus Edelstahl und sind geerdet um ein sicheres Arbeiten zu gewährleisten.

Die Einspeisung des Binders im Fließbett erfolgt vorzugsweise mit 10 - 100 L/h bei 1 - 10 bar, vorzugsweise mit 20 - 80 L/h bei 1 bis 8 bar.

Das Zusammenspiel zwischen der Zirkulation der Partikel und den Einsatz der Düsen- oder Zerstäuberkonstruktion (Z2) ermöglicht zum einen, eine große Kollisionswahrscheinlichkeit der Partikel untereinander und gleichzeitig vergrößert es die Haftkontaktflächen der Partikeln, so dass große stabile Agglomeratpartikel daraus entstehen können.

Die erfindungsgemäß erhältlichen Agglomeratpartikeln weisen durch die Konstruktion und Führung der Düsen- oder Zerstäuber eine kompakte stabile Struktur auf und demgemäß geringe Staubwerte und Abriebwerte.

In einer weiteren bevorzugten Ausführungsform umfasst die erfindungsgemäße Vorrichtung eine Wehrkonstruktion (G), welches ebenfalls im Fließbett (B) eingebaut und welches vor der Austrittöffnung (H) zum Zickzacksichter oder einem externen Fließbett plaziert ist. Das Wehr dient zur Einstellung des Füllstandes des Fließbettes und zur regelmäßigen Abfuhr der Partikel und zur Einstellung der Verweilzeit der Partikel im Fließbett. Demgemäß übernimmt der Zickzacksichter oder das externe Fließbett in der erfindungsgemäßen Vorrichtung die Funktion einer Windsichtung (Windsichten). Windsichten ist ein mechanisches Trennverfahren, bei dem Partikel anhand ihres Verhältnisses von Trägheits- bzw. Schwerkraft zum Strömungs-widerstand in einem Gasstrom getrennt werden. Es ist ein Klassierverfahren (Trennverfahren in der Verfahrenstechnik) und nutzt das Prinzip der Schwer- oder Fliehkrafttrennung aus. Feine Partikel folgen der Strömung, grobe der Massenkraft.

Die Wehrkonstruktion vor der Austragsöffnung zur Zickzacksichter oder einem externen Fließbett hat den Vorteil, dass zum einen, der Füllstand im Fließbett, und damit die Verweilzeit und somit die Partikelgröße reguliert werden kann, und zum anderen, ein Teil der Partikel sofort wieder in den Kopfraum des Sprühtrockners zurückgeführt wird. Sie durchlaufen somit den gesamten Prozess noch einmal. Im Kopfraum erfolgt die Bedüsung mit der Slurry, was zu einer ersten Agglomeration führt, unten in der Wirbelschicht werden die Partikel weiter aufagglomereriert, wodurch die Agglomeration gefördert und die Größe der Agglomeratpartikeln hier nochmals beeinflusst wird.

Die Wehrkonstruktion dient zudem zur Regulierung der Produktmenge im Fließbett so dass sichergestellt wird, dass eine ausreichende Menge an Partikeln im Fließbett vorhanden ist, damit eine Agglomeration auch erfolgen kann. Dies wiederum geschieht durch eine Menge an eingebrachter Binderflüssigkeit, die der Menge an Partikeln entspricht, wodurch verhindert wird, dass sich Verklumpungen bilden. Weiterhin kann durch das Wehr verhindert werden, dass zu viel Produkt im Fließbett vorliegt, so dass dieses nicht mehr fluidisiert werden kann.

In einer weiteren bevorzugten Ausführungsform der erfindungsgemäßen Vorrichtung beträgt die Eingangstemperatur am Beschickungszerstäuber (Z1) zwischen 100°C bis 220°C, die Ausgangstemperatur am Zickzacksichter 20 °C bis 100°C, wobei der Sluryydurchsatz im Bereich von 300 bis 1200 kg/Stunde beträgt, und mit 30 bis 200 bar zerstäubt wird. Bevorzugt ist die Eingangstemperatur 190°C -200 °C und die Ausgangstemperatur 80°C-20°C, oder bei leichtflüchtigen Einsatzstoffen beträgt die Eingangstemperatur von 100-130°C und die Ausgangstemperatur von 50°C-70°C. Die Temperatureinstellungen sind hier nur beispielhaft aufgeführt und werden je nach Komponenten entsprechend eingestellt.

In einer weiteren bevorzugten Ausführungsform der erfindungsgemäßen Vorrichtung beträgt die Temperatur im Fließbett während der Agglomeration zwischen 5-90°C.

In einer weiteren bevorzugten Ausführungsform der erfindungsgemäßen Vorrichtung wird der bei der Sprühtrocknung und der Agglomeration durch Abrieb entstehender Feinstaub in der Vorrichtung durch den Zickzacksichter oder ein externen Fließbett in den Kopfraum des Sprühturms zurückgeführt.

Die Rückführung des Feinstaubes in den Prozess hat den Vorteil, dass der Ausbeuteverlust minimiert wird sowie die Reduzierung des Feinstaubs im Prozess. Zusätzlich hat es den Vorteil, dass auch die Gefahr einer Staubexplosion reduziert bzw. minimiert wird.

Die nach dem erfindungsgemäßen Verfahren erhältlichen Agglomeratpartikeln weisen vorzugsweise einen Staubwert von weniger als 3, vorzugsweise weniger als 2, besonders bevorzugt zwischen 0,05 und 1,4 auf.

Die erfindungsgemäß erhältlichen Agglomeratpartikeln mit solchen Staubwerten sind vorteilhafterweise staubarm, und die niedrigen Staubwerte verweisen auf eine optimal Agglomeration. Dies hat den Vorteil, dass das Abfüllen, Lagern und der Transport der so erhältlichen Agglomeratpartikeln wesentlich verbessert und erleichtert wird.

Die nach dem erfindungsgemäßen Verfahren erhältlichen Agglomeratpartikel weisen vorzugsweise ein Schüttgewicht von mehr als 300 g/l auf.

Erfindungsgemäße Agglomeratpartikeln mit solchen Schüttgewichten weisen vorteilhafterweise eine stabilen Kern auf und somit eine gute Stabilität, insbesondere hinsichtlich des Abriebes, auf. Vor allem ist der Anteil an eingeschlossener Luft niedrig.

Die nach dem erfindungsgemäßen Verfahren erhältlichen Agglomeratpartikel weisen zudem vorzugsweise eine Fließfähigkeit der Partikel bei kleiner als 14, bevorzugt zwischen 0 und 14, besonders bevorzugt zwischen 5 und 14, ganz besonders bevorzugt zwischen 7 und 14, auf.

Erfindungsgemäße Agglomeratpartikeln mit solchen Fließfähigkeitswerten sind nicht kohäsiv und weisen vorzugsweise eine gute Löslichkeit auf. Diese Eigenschaft ist besonders bei Pulvern und Agglomeratpartikeln im Lebensmittelbereich wichtig, da sie einen großen Einfluss auf die Endanwendung und den Applikationsbereich haben. Dementsprechend führen die so erhältlichen Agglomeratpartikeln zu einer verbesserten Produktqualität.

In einer bevorzugten Ausführungsform der vorliegenden Erfindung liegen daher die erfindungsgemäß erhältlichen Agglomeratpartikel in einer rieselfähigen nicht staubenden Form vor. Solche Agglomeratpartikeln sind entsprechend leichter zu dosieren, besser zu verarbeiten und in den unterschiedlichsten Bereichen breit einsetzbar.

Die erfindungsgemäßen Agglomerationspartikel weisen eine Größe zwischen 300 µm und 800 µm, bevorzugt zwischen 400 µm und 700 µm.

Die Herstellung der Agglomeratpartikel mittels der erfindungsgemäßen Vorrichtung unterliegt üblicherweise den Prozessparametern, wie Temperatur, Druck, Strömung etc. Idealerweise lassen sich stabile große Agglomeratpartikel mit guten Schüttgewichten, Fließfähigkeitswerten und geringen Staubwerten, herstellen, in dem die oben genannten Temperaturen eingestellt werden. Demgemäß können die zur Herstellung von Agglomeratpartikeln eingestellte Parameter je nach benötigtem Agglomerat variieren, so dass die vorstehenden Parametern Richtwerte sind, die nicht einschränkend sein sollen.

Besonders wichtig ist hier bei der Herstellung von großen Agglomeratpartikeln, dass die Luft im internen Fließbett so eingestellt werden muss, dass die Partikel fluidisieren und eine gleichmäßige Verteilung im Bett aufweisen. Daher ist die Düsen- oder Zerstäuberkonstruktion (Z2) ein wichtiger Aspekt. Ebenso ist die Regulierung der Produktmenge im Fließbett ein essentieller Aspekt, dass die Herstellung von großen Partikeln beeinflusst. Weiterhin sind die Temperaturen am Eingang und Ausgang des Fließbettes so zu regulieren, dass eine Agglomeration möglich ist, d.h. vorzugsweise bei nicht zu heißen Temperaturen, damit der Binder nicht direkt trocknet und so die Partikel nicht verkleben können und auch nicht zu kalten Temperaturen, da sonst das Produkt nass wird und die Partikel verklumpen würden und die Wirbelschicht zusammenbräche (nassfahren).

Ein weiterer Gegenstand der vorliegenden Erfindung sind erfindungsgemäß erhältliche Agglomerationspartikel, wobei es sich bei den Agglomeratpartikeln um Aromapartikeln handelt.

Insbesondere in Bereich der Aromen, die in Futtermittel, Nahrungs- und Lebensmittelbereich eingesetzt werden, sind die Anforderungen an solchen Agglomeratpartikeln sehr hoch. Ebenfalls können durch die erfindungsgemäß erhältlichen Aroma- Agglomerapartikeln die Aromen besonders breit im Futtermittel, Nahrungs- und Lebensmittelbereich eingesetzt werden. Auch können die Aromen so besonders gut in das Futtermittel, Nahrungs- und Lebensmittel eingebracht werden, so dass ein verbesserter sensorischer Effekt erreicht werden kann.

Geeignete Aromen und Aromastoffe für die Herstellung der Partikel der vorliegende Erfindung sind vorzugsweise zu finden in z.B. "Riechstoffe", in Steffen Arctander, in "Perfume and Flavor Chemicals", Eigenverlag, Montclair, N. J. 1969; H. Surburg, J. Panten, in "Common Fragrance and Flavor Materials", 5th Edition, Wiley-VCH, Weinheim 2006. Es seien beispielsweise ge-nannt: Ester (gesättigt oder ungesättigt) wie z. B. Ethylbutyrat, Allylcapronat, Benzylacetat, Methylsalicylat; organische Säuren (gesättigt und ungesättigt) wie z. B. Buttersäure, Essig-säure, Methylbuttersäure, Capronsäure; Alkohole (gesättigt und ungesättigt) wie z. B. Ethanol, Propylenglykol, Octenol, cis-3-Hexanol, Benzylalkohol, Phenylethylalkohol; Aldehyde (gesättigt und ungesättigt) wie z. B. Acetaldehyd, Isobutyraldehyd, Nonadienal, Benzaldehyd, 3-Phenylacetaldehyd; Ketone wie z. B. Menthon; Ether wie z. B. 4-Hydroxy-5-methylfuranon, 3-Hydroxy- 4,5-dimethyl-2-(5H)-furanon, 2,5-Dimethyl-3-hydroxy-2(3H)-furanon, 2(5)-Ethyl-4-hydroxy-5(2)-methyl-3(2H)-furanon, p-Methoxybenzaldehyd, Guajacol, Methoxyvi-nylphenol; Acetale wie z. B. Acetaldehyddiethylacetal; Lactone wie z. B. gamma- Decalacton; Terpene wie z. B. Limonen, Linalool, Terpinen, Terpineol, Citral (Geranial und Neral), Men-thol; Sulfide und Disulfide wie z. B. Dimethylsulfid, Difurfuryldisulfid, Methylthiopropanal; Thiole wie z. B. Methylfuranthiol; Pyrazine und Pyrroline wie z. B. Methylpyrazin, Acetylpy-razin, 2-Propionylpyrrolin, 2-Acetylpyrrolin,

Acetophenon, Allylcapronat, alpha-lonon, beta-lonon, Anisaldehyd, Anisylacetat, Anisylfor-miat, Benzaldehyd, Benzothiazol, Benzylacetat, Benzylalkohol, Benzylbenzoat, beta-lonon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dode-calacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isop-ropylmethylthiazol, Laurinsäure, Leavulinsäure, Linalool, Linalooloxid, Linalylacetat, Men-thol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Der Begriff "Lebensmittel" bzw. "Nahrungsmittel" umfasst insbesondere Produkte, die gemäß der VERORDNUNG (EG) Nr. 178/2002 DES EUROPÄISCHEN PARLAMENTS UND DES RATES vom 28. Januar 2002 Lebensmittel sind. Gemäß dieser Verordnung sind "Lebensmittel" alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

In der vorliegenden Erfindung ist unter den Begriff Lebensmittel bzw. Nahrungsmittel auch Nahrungsergänzungsmittel zu verstehen.

Nahrungsergänzungsmittel sind dem Fachmann in verschiedenen Ausführungsformen bekannt und geläufig. Sie bestehen unter anderem aus Vitaminen und/oder Mineralien und werden zur Gewährleistung einer ausreichenden Nährstoffversorgung bei Mensch und Tier eingesetzt. Insbesondere kann mit derartigen Nahrungsergänzungsmitteln Mangelerscheinungen bei ungesunder Ernährung vorgebeugt werden. Sie können präventiv eingesetzt werden, um das Auftreten verschiedener Krankheiten zumindest zu verzögern. Derartige Nahrungsergänzungsmittel sind üblicherweise rezeptfrei erhältlich.

Ein weiterer Gegenstand der vorliegenden Erfindung ist die Verwendung der erfindungsgemäß erhältlichen Agglomeratpartikel zur Herstellung von Futtermittel, Nahrungs- bzw. Lebensmittelprodukten.

Die erfindungsgemäß erhältlichen Agglomeratpartikeln sind vorzugsweise Zwischenprodukte und können in Endprodukten im Lebensmittelbereich eingesetzt werden, bevorzugt als Aroma-Agglomeratpartikeln. Vorzugsweise handelt es sich bei dem Lebensmittel beispielsweise um Backwaren, beispielsweise Brot, Trockenkekse, Kuchen, sonstiges Gebäck, Dauerbackwaren oder Snacks wie beispielsweise Kräcker, Laugengebäck, Kekse, Kartoffel- oder Maischips (z. B. Tortilla-Chips), Weizenmehlprodukte, (z. B. Gebäckstangen, Croutons, Brotchipse, Zwieback, extrudierte und nicht-extrudierte Knäckebrote) Süßwaren (beispielsweise Schokoladen, Schokoladenriegelprodukte, sonstige Riegelprodukte, Fruchtgummi, Hart- und Weichkaramellen, Kaugummi), alkoholische oder nicht-alkoholische Getränke (beispielsweise Kaffee, Tee, Eistee, Wein, weinhaltige Getränke, Bier, bierhaltige Getränke, Liköre, Schnäpse, Weinbrände, (carbonisierte) fruchthaltige Limonaden, (carbonisierte) isotonische Getränke, (carbonisierte) Erfrischungsgetränke, Nektare, Schorlen, Obst- und Gemüsesäfte, Frucht- oder Gemüsesaftzubereitungen, "Instant" Produkten, wie Instantgetränke (beispielsweise Instant-Kakao-Getränke, Instant-Tee-Getränke, Instant-Kaffeegetränke, Instant-Fruchtgetränke), Fleischprodukte (beispielsweise Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (beispielsweise Frühstückscerealien, Müsliriegel, vorgegarte Fertigreis-Produkte), Milchprodukte (beispielsweise Milchgetränke, Buttermilchgetränke, Milcheis, Joghurt, Kefir, Frischkäse, Weichkäse, Hartkäse, Trockenmilchpulver, Molke, Molkegetränke, Butter, Buttermilch, teilweise oder ganz hydrolisierte Milchprotein-haltige Produkte), Produkte aus Sojaprotein oder anderen Sojabohnen-Fraktionen (beispielsweise Sojamilch und daraus gefertigte Produkte, Fruchtgetränke mit Sojaprotein, Sojalecithinhaltige Zubereitungen, fermentierte Produkte wie Tofu oder Tempe oder daraus gefertigte Produkte), Produkte aus anderen pflanzlichen Proteinquellen, beispielsweise Haferprotein-Getränke, Fruchtzubereitungen (beispielsweise Konfitüren, Fruchteis, Fruchtsoßen, Fruchtfüllungen), Gemüsezubereitungen (beispielsweise Ketchup, Soßen, Trockengemüse, Tiefkühlgemüse, vorgegarte Gemüse, eingekochte Gemüse), Knabberartikel (beispielsweise gebackene oder frittierte Kartoffelchips oder Kartoffelteigprodukte, Extrudate auf Mais- oder Erdnussbasis), Produkte auf Fett- und Ölbasis oder Emulsionen derselben (beispielsweise Mayonnaise, Remoulade, Dressings), sonstige Fertiggerichte und Suppen (beispielsweise Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Demgemäß ist eine bevorzugte Ausführungsform erfindungsgemäß erhältliche Agglomerationspartikel, wobei es sich bei den Agglomeratpartikeln um ein Zwischenprodukt handelt, dass später in ein Futtermittel, Lebensmittel- bzw. Nahrungsmittel eingearbeitet wird. Bei dem erfindungsgemäß erhältlichen Agglomerationspartikel handelt es sich um Aromapartikel.

"Futtermittel" im Sinne dieser Beschreibung ist jedes Futtermittel, das für Tiere zum Verzehr geeignet ist.

Unter "Tiere" im Sinne dieser Beschreibung werden die folgenden Tiere, sowie sämtliche Rassen und Unterarten der hier aufgeführten Tiere verstanden, wobei die vorliegende Aufzählung nicht einschränkend sein soll: Fische, Hamster, Hasen, Hauskatzen, Hunde, Katzen, Kaninchen, Mäuse, Meerschweine, Schlangen, Reptilien, Spinnen, Ratten, Chinchilla, Insekten, sämtliche Kameliden wie beispielsweise Lamas und Alpakas; Pferde, Kleinpferde (Pony, etc.), Rentiere, Rinder, Milchvieh, Schafe, Schweine, Ziegen, Milbenarten, Honigbienen, Seidenraupen, Dromedar, Elch, Elefant, Esel, Kamel, Nerz, Nutria, Frettchen, sämtliche Vogel- und Geflügelarten (Urkiefervögel und Neukiefervögel) wie beispielsweise Brieftauben, Kanarienvögel, Sitticharten wie Nymphensittich, Wellensittich, Papageien, Beos, Stare, Raben, Falken und andere Greifvögel, Hühner, Enten, Fasane, Gänse, Laufvögel, Perlhühner, Rebhühner, Tauben, Truthühner, Wachteln.

Bevorzugte Ausführungsformen der vorliegenden Erfindung sind gängige Futtermittel, ausgewählt aus folgender Gruppe: stärkereiches Futtermittel, ölhaltiges Futtermittel, Grünfuttermittel, Nassfuttermittel, Trockenfuttermittel, Ergänzungsfutter, Mineralfutter, Konzentratfutter, Grundfutter, Zusatz- und Wirkstofffutter, Melassefutter, Raufutter, Grobfutter, Saftfutter, Kraftfutter, Pelletfutter, Müslifutter, Fertigfutter, Alleinfutter, Einzelfutter wie beispielsweise Getreidekörner, deren Erzeugnisse und Nebenerzeugnisse, Körnerleguminosen, deren Erzeugnisse und Nebenerzeugnisse, Ölsaaten und Ölfrüchte, sowie sonstige ölliefernde Pflanzen, deren Erzeugnisse und Nebenerzeugnisse, Nebenerzeugnisse des Gärungsgewerbes und der Destillation, Knollen und Wurzeln, deren Erzeugnisse und Nebenerzeugnisse, andere Samen, Früchte, Pflanzen, deren Erzeugnisse und Nebenerzeugnisse, Milcherzeugnisse, Mineralstoffe, Fisch sowie andere Meerestiere, deren Erzeugnisse und Nebenerzeugnisse, tierisches Fleisch, tierische Fleischerzeugnisse und deren Nebenerzeugnisse, Lebensmittelidentische Stoffe und Erzeugnisse sowie Nebenerzeugnisse der Lebensmittelindustrie, Proteinerzeugnisse aus Mikroorganismen, Hydroxyanaloga von Methionin und ihre Salze, Aminosäuren und ihre Salze, Harnstoff und seine Derivate sowie Ammoniumsalze, andere NPN-Verbindungen.

### HERSTELLVERFAHREN

Die vorliegende Erfindung betrifft ein Verfahren zur Herstellung von Agglomeratpartikeln mit einer durchschnittlichen Größe zwischen 300 µm und 1.000 µm wobei das Verfahren die Schritte umfasst:
(i) Herstellen von pulvrigen Partikeln mittels einer Sprühtrocknung, in einem Sprühtrocknung-Agglomerationsvorrichtung mit einem Sprühtrocknungsabschnitt (A) im oberen Bereich einer Kammer zum Trocknen von Beschickungsflüssigkeit, die von einem Beschickungsflüssikeitszerstäuber (Z1) gesprüht werden,
(ii) Besprühen der pulvrigen Partikeln mit einer Binderflüssigkeit,
in einem integriertem Fließbett (B) im Sprühtrocknung-Agglomerationssvorrichtung, das sich im unteren Bereich einer Kammer befindet, in dem das Pulver vom Sprühtrocknungsabschnitt aus Schritt (i) mittels einer Düsen- oder Zerstäuberkonstruktion (Z2), das unten am Fließbett (B) angebracht ist, mit einer Binderflüssigkeit besprüht wird, wobei die Partikel während der Herstellung ständig in Bewegung gehalten und aufgewirbelt werden.

Die weitere Konstruktion für die Sprühtrocknung-Agglomerationsvorrichtung ist wie bereits oben beschrieben.

In einer bevorzugten Ausführungsform umfasst der Sprühtrocknungs-Agglomerationsvorrichtung eine Wehrkonstruktion (G), das im Fließbett (B) integriert ist und welches vor der Austrittöffnung (H) zum Zickzacksichter platziert ist.

Ein solche Verfahren ermöglicht die Herstellung von großen Agglomeratpartikeln, die größer als 300 µm und bis zu 600 µm oder sogar bis zu 1000 µm groß sein können und entsprechend ein Applikationsbedarf im Lebensmittelbereich abdecken kann, der bisher nicht möglich ist.

### HERSTELLBEISPIELE

### Herstellung von Agglomeratpartikeln

Es werden Agglomeratpartikeln mit Aromabeladung hergestellt. Dazu werden Primärpartikel in der oberen Kammer der Apparatur mittels Sprühtrocknung hergestellt, die dann im unteren Teil der Apparatur mit Binderflüssigkeit besprüht werden. Hierbei wird sichergestellt, dass dem Fließbett stets eine ausreichende Menge an Primärpartikeln zugeführt wird, um den Prozess aufrecht zu erhalten.

Die Eingangsluft im Turm beträgt 160 - 200 °C. Die Temperatur im Fließbett wird auf 30 - 50 °C gedrosselt, damit die Primärpartikel genug Zeit haben durch die eingesprühte Dispersion zu agglomerieren. Zu hohe Temperaturen würden hier zu hohen Trockenraten führen, wodurch die eingesprühte Dispersion auf den Partikeloberflächen antrocknen könnte, bevor eine Agglomeration stattgefunden hat.

Der Prozess wird ansonsten unter Normalbedingungen angefahren, bis das Fließbett bis zu einem turmspezifischen Grad gefüllt ist. Das wird erreicht, indem zunächst das Wehr geschlossen wird. Dann erfolgt die Einspeisung der "Binderflüssigkeit" im Fließbett und das Wehr wird geöffnet. Diese Suspension kann entweder aus der Slurry selbst bestehen oder falls eine zusätzliche Versiegelung der Partikeloberflächen erwünscht ist und eine hohe mechanische Stabilität nötig ist mit niedermolekularen Substanzen mit guter Haftwirkung wie z.B. Dextrose, Sorbitol, Mannitol usw. versetzt sein. Auch eine Benetzung mit Wasser oder Wasserdampf ist je nach gewünschten Partikeleigenschaften möglich.

Bei den Düsen aus der die Binderflüssigkeit ins Bett versprüht wird handelt es sich um Zweistoffdüsen mit kleinen Bohrungen, die einen möglichst feinen Sprühnebel im Fließbett erzeugen. Die über diese Düsen eingetragenen Luftströme tragen zur Fluidisierung der Partikel bei und sorgen für eine gleichmäßige Benetzung der Partikel und somit eine steuerbares Agglomeration ohne Verklumpungen.

Zeichnung 1 verdeutlicht die Position der einzelnen technischen Vorrichtungsmerkmale in einer Agglomeration-Sprühtrocknungs-Apparatur für die Herstellung der erfindungsgemäßen großen Agglomeratpartikel.

### Auswirkung der Düsen- bzw. Zerstäuberkonstruktion auf Agglomeratpartikeln

Es wurden Agglomeratpartikeln hergestellt, wobei die Wirkung der Düsen- bzw. Zerstäuberkonstruktion (z) im internen Fließbett (b) auf die Agglomerate getestet wurde. Die Ergebnisse sind in der folgenden Tabelle zu entnehmen.

**Tabelle 1:**

| Ergebnisse mit unterschiedlichen Düsen- bzw. Zerstäuberkonstruktionen | | | |
|---|---|---|---|
| **Düsen- bzw. Zerstäuberkonstruktion** | **Zerstäubungsdruck im Fließbett** | **Volumenstrom im Fließbett** | **Beobachtung** |
| 1 Düse (Versuchsturm) | 0,5-2 bar | 0,5-3 L/h | Große stabile Agglomerate |
| 4 Düsen | 3-6 bar | 30-80 L/h | Stabile Agglomerate, Verteilung im Fließbett gut |
| Ringleitung mit 6-8 Düsen | 3-6 bar | 30-80 L/h | Große stabile Agglomerate, gleichmäßige Zerstäubung im Fließbett |
| Doppel-Ringleitung mit 3 Düsen im Innenring und 6 Düsen im Außenring | 3-6 bar | 30-80 L/h | Große stabile Agglomerate, nochmals bessere Verteilung |

Je kleiner der Druck desto größer die Tropfen und desto ungleichmäßiger die Tröpfchenverteilung. Dies kann zu einer schnelleren Agglomeration führen. Es besteht aber die Gefahr, dass die Düsen sich bei geringerem Druck nicht mehr freiblasen (sich also zusetzen), dass die Dichte der Partikel zu schnell zunimmt und die Partikel nicht genug aufgewirbelt werden und die Wirbelschicht somit zusammenbricht. Der Druck muss demgemäß sowohl der Zufuhr an Primärpartikeln als auch der eingespeisten Menge an Binderflüssigkeit angepasst werden Diese Optimierung ist für jede Konfiguration (Turm, Fließbettgröße, Durchsatz Primärpartikel, etc.) durchzuführen.

### Dichte und Strukturbestimmung der Agglomeratpartikeln

### I) Partikelgröße der Agglomeratpartikeln

Die Partikelgrößen der erfindungsgemäß hergestellten Agglomerate wurden mittels einer Messung durch Laserbeugung bestimmt.

Das Prinzip der Laserbeugung ist eine ausgesprochen flexible Technik, mit der Möglichkeit prinzipiell die Größe von jedem Material in einem anderen zu messen. Die einzigen Bedingungen der Technik sind, dass sich jede Phase von der anderen optisch abgrenzt und das Medium transparent für die Laserwellenlänge ist. Das bedeutet, dass sich der Brechungsindex von Material und vom umgebenden Medium unterscheiden muss.

Die Messung erfolgt durch Einbringen der Probe in den Laserstrahl durch die entsprechenden Module für Pulver oder Emulsionen/ Suspensionen. Das von den Partikeln gestreute Licht wird detektiert. Die gesamte Laserleistung, die auf dem Weg aus diesem System gelenkt wird, wird gemessen und erlaubt auch Rückschlüsse auf die Probenkonzentration.

Das hier verfügbare Gerät (Malvern Mastersizer 2000 mit Scirocco-Trockeneinheit) bietet die Möglichkeit Pulver bis max. 2mm Partikelgrösse zu messen. Dabei kann ein Dispersionsdruck zum Einziehen des Pulvers von 0 bis 4 bar angewendet werden. Es ist jedoch darauf zu achten, dass das Produkt dabei nicht zerstört wird, da es mit dem eingestellten Druck beim Einziehen gegen eine Prallplatte gesaugt wird.

### II) Strukturbestimmung der Agglomeratpartikeln

Die Struktur der erfindungsgemäß hergestellten Agglomerate wurde mittels einer Lupe (Fa. Will mit Kamera) auf einer schwarzen Probenplatte bestimmt.

Zur besseren Erkennung von Strukturen getrockneter Aromen oder Zusammensetzung von Applikationen wie z.B. aromatisierten Teemischungen setzt man eine Lupe ein. Hier kann eine Probe mit einer Vergrößerung zwischen 7- und 45fach analysiert werden.

Zeichnung 1 und Zeichnung 2 zeigen die erfindungsgemäß hergestellten Agglomeratpartikeln im Vergleich zu Agglomeraten, die nach dem gängigen Verfahren hergestellt werden. Die mikroskopischen Bilder verdeutlichen, dass die erfindungsgemäß hergestellten Partikeln teilweise mehr als doppelt so groß (ca. 600 µm und größer) sind als die Standard- Partikel. Sie weisen gleichzeitig eine deutlich dichtere und somit stabilere Struktur auf.

Zeichnung 1 und Zeichnung 2 zeigen die erfindungsgemäß hergestellten Agglomeratpartikeln im Vergleich zu Agglomeraten, die nach dem gängigen Verfahren hergestellt werden. Die mikroskopischen Bilder verdeutlichen, dass die erfindungsgemäß hergestellten Partikeln teilweise mehr als doppelt so groß (ca. 600 µm und größer) sind als die Standard- Partikel. Sie weisen gleichzeitig eine deutlich dichtere und somit stabilere Struktur auf.

Die Ergebnisse sind in Tabelle 1 wiedergegeben.

### Abriebfestigkeit von Trockenprodukten

Der Abriebtest wurde mittels eines Friabilators durchgeführt.

Bei dieser Analysenmethode wird die mechanische Stressung nachgestellt, der ein Produkt beim Transport und bei der Weiterverarbeitung ausgesetzt ist.

Das Produkt erfährt im Haufwerk während der Analyse eine Rotationsbewegung und einen freien Fall, so dass instabile Produkte brechen oder an eventuellen Kanten abgerieben werden können. Der entstandene Abrieb ist ein Feinanteil, der das eigentliche Produkt verfälscht bzw. für die Weiterverarbeitung nicht verwendet werden kann

Der Abriebtest mittels Friabilator wurde unter folgenden Bedingungen durchgeführt:

| Intensität | Dauer | Einwaage |
|---|---|---|
| Stufe 3 | 10 Min | 50g |

Es ist zu erkennen, dass sich die Partikelgröße durch die Reibung bei allen Mustern auch bei den mechanisch sehr stabilen Standardpartikeln verringert. Jedoch ist auch zu erkennen, dass selbst nach der starken mechanischen Beanspruchung der d(50)µm der erfindungsgemäß hergestellten Partikel noch im Bereich von 300 - 600 µm liegt (siehe Tabelle 2).

### Bestimmung der Fließfähigkeit der Agglomeratpartikel

Die Fliessfähigkeit der Agglomeratpartikeln wurden mittels einem Gerät Powder Flow Analyser bestimmt. Diese Methode ermöglicht die Messung der Fließfähigkeit von Pulvern

Die Pulverprobe wird dazu in einen zylindrischen Behälter gegeben. Dann wird der Rührer mit seinen schrägen Rührblättern rotierend durch die Probe auf- und abgeführt. Dies geschieht in einem definierten Winkel und mit definierter Geschwindigkeit. Aus dem Widerstand des Pulvers kann dann der FFC- Wert, ein Maß für die Fließfähigkeit errechnet werden.

Die Fließfähigkeit ist für Umfüll- und Dosierprozesse in der Produktion oder beim Kunden ein wesentliches Kriterium.

Der Vorteil dieser Messmethode ist die Möglichkeit auch nicht freifließende Pulver mit einem Wert zu charakterisieren, was bei herkömmlichen Methoden wie dem Schüttwinkel nicht möglich ist.

Die Fließfähigkeit der Agglomerate wurde als FFC-Wert gemessen.
Es gilt die folgende FFC-Skalierung:

| | |
|---|---|
| 0 < FFC < 11 | frei fließend |
| 11< FFC < 14 | leicht fließend |
| 14 < FFC < 16 | kohäsiv |
| 16 < FFC < 19 | sehr kohäsiv |
| FFC > 19 | härtend |

In Tabelle 1 ist zu erkennen, dass alle erfindungsgemäß hergestellten Agglomerate als frei fließend eingeordnet werden können.

### Bestimmung der Staubwerte der Agglomerat Partikel

Die Staubwerte der hergestellten Agglomerate wurden mit einem SP3-Staubmessgerät nach der Fallmethode nach DIN 55992-2 bestimmt.

Eine definierte Menge Probensubstanz wird in das Beschickungssystem eines senkrechten Fallrohres gegeben. Nach schlagartigem Öffnen des Beschickungssystems fällt die Probe in dem Rohr zu Boden. Treffen die Partikel auf die Bodenplatte, so bleiben einige Partikel liegen und andere gelangen als Schwebstaub in die Aufprallzone direkt oberhalb der Bodenplatte. In dieser Aufprallzone wird mit einer Laser-Lichtquelle und einer Fotozelle die Licht Extinktion über einen definierten Zeitraum (30 sec) gemessen. Die Extinktion ist ein Maß für das Staub verhalten der Probe.

Die Staubentwicklung spielt z.B. in der Produktion eine große Rolle, da es dadurch zu Kreuz-Kontaminationen oder auch gesundheitlichen Beeinträchtigungen der Mitarbeiter führen kann. Auch bei Abfüllprozessen darf nahezu kein Staub entstehen, da sonst Verpackungen nicht richtig verschweißt oder Etiketten richtig geklebt werden können.

Es gilt die folgende Staubwert-Skalierung:

| | |
|---|---|
| 500 | extrem hohe Staubwerte |
| 150 | sehr hohe Staubwerte |
| 30 | normaler Staubwerte |
| 5 | geringer Staubwerte |
| < 2 | extrem geringe Staubwerte |

Die erfindungsgemäß hergestellten Agglomeratpartikeln weisen extrem geringe Staubwerte auf, die nach den oben aufgeführten Grenzen kohäsive Produkte erwarten lassen würden. Im Zusammenhang mit den Fießfähigkeitsmessungen kann jedoch ausgeschlossen werden, dass die Pulver kohäsiv sind, sie sind nur ungewöhnlich staubarm. Die Agglomerate der Vergleichspartikel weisen alle einen höheren Staubwert auf (Tabelle 1).

**Tabelle 2**

| Zusammenfassung der Ergebnisse | | | | | | | |
|---|---|---|---|---|---|---|---|
| **Agglomerat** | **Beladung** | **Dichtemessung** | | | **FFC** | **Staubwert** | **Schüttge wicht** |
| | | **d(0,1)µm** | **d(0,5)µm** | **d(0,9)µm** | | | |
| 1 | Pilzaroma E* | 96 | 388 | 952 | 13,6 | 0,61 | 410g/l |
| 2 | Mangoaroma E* | 127 | 397 | 856 | 10 | 1,85 | 350g/l |
| 3 | Pfirsicharoma E* | 177 | 758 | 1443 | 11,2 | 0,08 | 450g/l |
| 4 | Zitronenaroma E* | 266 | 651 | 1288 | 12,7 | 1,24 | 430g/l |
| 5 | Zitronenaroma E* | 270 | 509 | 910 | 11,9 | 3,08 | 580g/l |
| 6 | Himbeere E* | 120 | 418 | 1130 | 8,9 | 1,11 | 480g/l |
| | | | | | | | |
| 7 | Bergamotte A | 131 | 362 | 745 | 14 | 34,8 | 460g/l |
| 8 | Bergamotte_V * | 420 | 580 | 799 | 13,3 | 19,3 | 720g/l |
| 9 | Pfirsicharoma A | 42 | 146 | 308 | 10 | 20 | 330g/l |
| 10 | IrishCream_V* | 462 | 633 | 869 | 12,8 | 4,65 | 660g/l |

Mit Ausnahme von Agglomerat 5, das gemäß der erfindungsgemäßen Vorrichtung im Produktionsturm hergestellt wurde, wurden die Agglomerate 1-4 sowie 6 im Versuchsturm hergestellt.
A* = Agglomerate hergestellt mittels marktverfügbarer Technologie (Sprühtrocknung mit integrierter Agglomeration)
V* = stabilstes Agglomerate in vergleichbare Größe, hergestellt nach dem Verfahren der Sprühgranulation.

**Tabelle 3**

| Abriebtest mittels Friabilator | | | | |
|---|---|---|---|---|
| **Agglomerat** | | **Dichtemessung** | | |
| | | **d(0,1)µm** | **d(0,5)µm** | **d(0,9)µm** |
| 1 | | 96 | 388 | 952 |
| | Abrieb | 84 | 266 | 703 |
| 2 | | 127 | 397 | 856 |
| | Abrieb | 126 | 380 | 788 |
| 3 | | 177 | 758 | 1443 |
| | Abrieb | 156 | 610 | 1316 |
| 4 | | 266 | 651 | 1288 |
| | Abrieb | 147 | 377 | 862 |
| 5 | | 270 | 509 | 910 |
| | Abrieb | 180 | 401 | 747 |
| 6 | | 120 | 418 | 1130 |
| | Abrieb | 104 | 309 | 798 |
| 7 | | 131 | 362 | 745 |
| | Abrieb | 122 | 309 | 629 |
| 8 | | 420 | 580 | 799 |
| | Abrieb | 395 | 536 | 732 |
| 9 | | 42 | 146 | 308 |
| | Abrieb | 42 | 146 | 308 |
| 10 | | 462 | 633 | 869 |
| | Abrieb | 419 | 574 | 782 |

### Klimatest im Klimaschrank

Trockenaromen basieren meist auf zuckerhaltigen Matrices. Diese sind aufgrund ihrer Hygroskopizität empfindlich gegenüber Temperatur in Kombination mit Luftfeuchtigkeit. Da diese Aromen aber während ihres Verarbeitungsprozesses und in Applikationen häufig einem derartigen physikalischen Stress ausgesetzt sind, müssen sie während der Entwicklungsphase schon auf dessen Verträglichkeit hin getestet werden.

So wird z.B. ein mit Trockenaroma vermischter Tee nur in einer Pappverpackung i.d.R. in der Küche gelagert und erfährt währenddessen regelmäßig relativ hohe Luftfeuchtigkeit bei Raumtemperatur. Zudem werden Trockenaromen in die ganze Welt verkauft und sollen auch in anderen Klimazonen eine bestimmte Mindestqualität und - Stabilität gegenüber den dort herrschenden Temperaturen und Luftfeuchtigkeit erfüllen. Diese Situation soll die Lagerung im Klimaschrank bei einer erhöhten Luftfeuchtigkeit und erhöhter Temperatur simulieren. Die Ergebnisse sind in der folgenden **Tabelle 4** wiedergegeben:

**Tabelle 4**

| Ergebnisses des Klimatests im Klimaschrank | | | | | | | |
|---|---|---|---|---|---|---|---|
| **Einwaage** | **3,0 g** | | | | | | |
| **Zeitraum** | **0h** | **5h** | **24h** | **29h** | **48h** | **120h** | **144h** |
| **Agglomerat** | | | | | | | |
| Zitrone | 3,0 | 3,0 | 3,0 | 3,0 | 3,0 | 3,01 | 3,01 |
| Zitrone V* | 3,0 | 3,02 | 3,08 | 3,09 | 3,1 | 3,11 | 3,11 |
| Bergamotte | 3,0 | 3,06 | 3,11 | 3,12 | 3,12 | 3,13 | 3,13 |
| Bergamotte V* | 3,0 | 3,01 | 3,03 | 3,03 | 3,03 | 3,03 | 3,03 |
| Zimt | 3,0 | 3,0 | 3,0 | 3,0 | 3,0 | 3,0 | 3,0 |
| Zimt V* | 3,0 | 3,0 | 3,03 | 3,03 | 3,05 | 3,05 | 3,06 |
| Erdbeer | 3,0 | 3,0 | 3,0 | 3,0 | 3,0 | 3,0 | 3,0 |
| Erdbeer V* | 3,0 | 3,03 | 3,09 | 3,09 | 3,1 | 3,1 | 3,1 |

Es wurden erfindungsgemäße Agglomeratpartikel, die mit den entsprechenden Aromen beladen wurden (Herstellung wie oben beschrieben) mit Agglomeratpartikeln, die mittels Sprühtrocknung nach dem Standardverfahren (V*) verglichen.

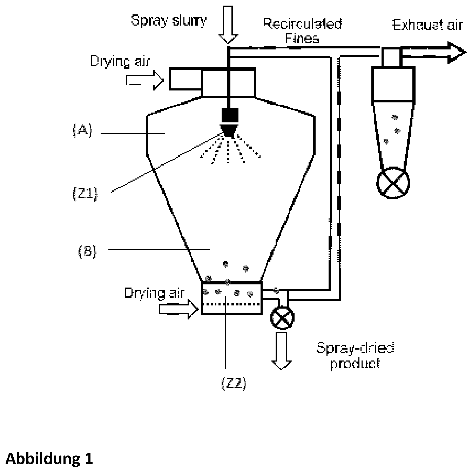

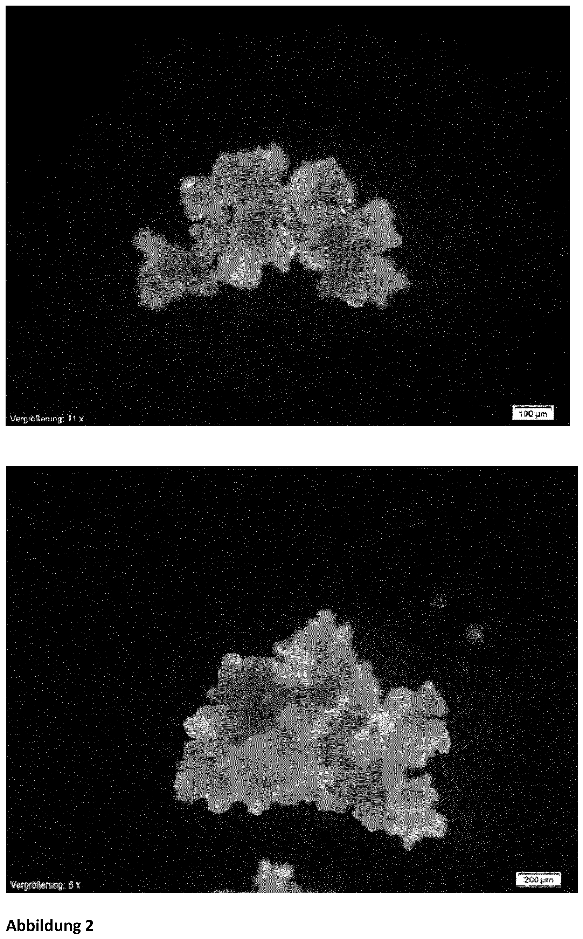

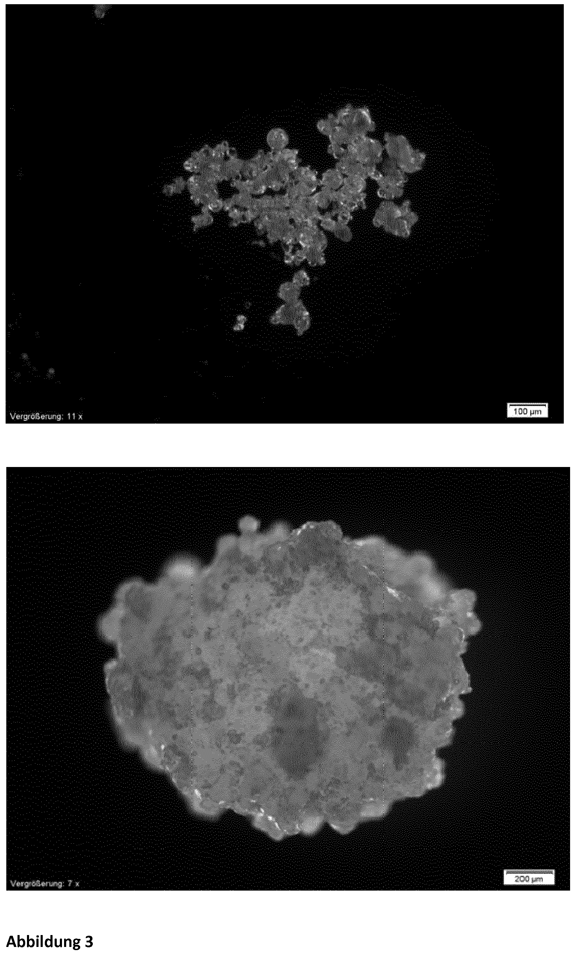

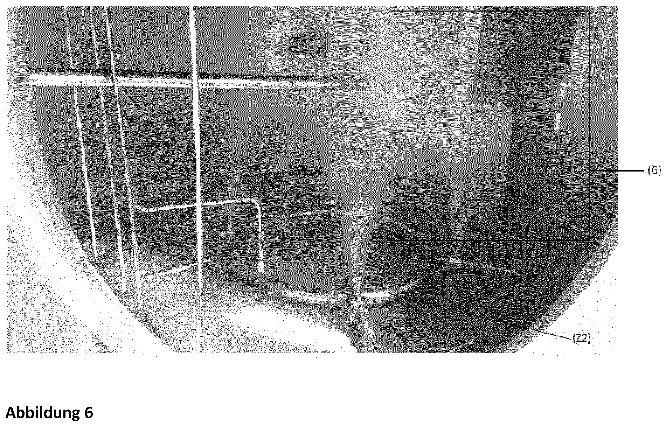

Die Erfindung wird des Weiteren durch die folgenden **Abbildungen 1 bis 6** illustriert:
- Abbildung 1:: Agglomeration-Sprühtrocknungs-Vorrichtung
- Abbildung 2:: Agglomerat Partikel mit Mango-Aroma: Standard (oben), erfindungsgemäß (unten)
- Abbildung 3:: Agglomerat Partikel mit Schokoladen-Aroma: Standard (oben), erfindungsgemäß (unten)
- Abbildung 4:: Vorrichtung mit Düsen- bzw. Zerstäuberkonstruktion (Z2) und Wehr (Verschlussklappe) (G) im Fließbett (B)
- Abbildung 5:: Anordnung der Düsen- bzw. Zerstäuberkonstruktion (Z2)
- Abbildung 6:: Anordnung der Düsen- bzw. Zerstäuberkonstruktion (Z2) im Fließbett (B) mit Wehrkonstruktion (G)

## Patentansprüche

1. Verfahren zur Herstellung von Agglomeratpartikeln mit einer durchschnittlichen Größe zwischen 300 µm und 1.000 µm umfassend die Schritte
(i) Herstellen von pulvrigen Partikeln mittels einer Sprühtrocknung, in einer Sprühtrocknungs-Agglomerationsvorrichtung mit einem Sprühtrocknungsabschnitt (A) im oberen Bereich einer Kammer zum Trocknen von Beschickungsflüssigkeit, die von einem Beschickungsflüssigkeitszerstäuber (Z1) gesprüht werden,
(ii) Besprühen der pulvrigen Partikel mit einer Binderflüssigkeit, in einem integriertem Fließbett (B) in der Sprühtrocknungs-Agglomerationsvorrichtung, das sich im unteren Bereich einer Kammer befindet, in dem das Pulver vom Sprühtrocknungsabschnitt aus Schritt (i) mittels einer Düsen- oder Zerstäuberkonstruktion (Z2), das unten am Fließbett (B) angebracht ist, mit einer Binderflüssigkeit besprüht wird,
wobei die Partikel während der Herstellung ständig in Bewegung gehalten und aufgewirbelt werden.

2. Verfahren nach Anspruch 1, wobei die Düsen- oder Zerstäuberkonstruktion (Z2) im internen Fließbett (B), aus einer Ringleitung besteht, **dadurch gekennzeichnet, dass** entlang der Ringleitung in gleichmäßigen Abständen Düsen oder Zerstäuber platziert sind, wobei die Düsen- oder Zerstäuberkonstruktion (Z2) mindestens 3 Düsen- oder Zerstäuber umfasst und es sich um eine Zweifluid-Sprühdüse handelt und die Binderflüssigkeit aus der Düsen- oder Zerstäuberkonstruktion (Z2) im internen Fließbett von unten nach oben versprüht wird.

3. Verfahren nach Anspruch 1 oder 2, **dadurch gekennzeichnet, dass** die Sprühtrocknungs-Agglomerationsvorrichtung eine Wehrkonstruktion (G) umfasst, die im Fließbett (B) integriert ist und vor der Austrittöffnung (H) zum Zickzacksichter platziert ist.

4. Verfahren nach einem der Ansprüche 1 bis 3, **dadurch gekennzeichnet, dass** der durch Abrieb entstehende Feinstaub in der Vorrichtung durch den Zickzacksichter oder einem externen Fließbett in den Kopfraum des Sprühturms zurückgeführt wird.

5. Verfahren nach einem der Ansprüche 1 bis 4, **dadurch gekennzeichnet, dass** die Sprühtrocknung-Agglomerationsvorrichtung eine Wehrkonstruktion (G) umfasst, die im Fließbett (B) integriert ist und welche vor der Austrittöffnung (H) zum Zickzacksichter oder einem externen Fließbett platziert ist.

6. Verfahren nach einem der Ansprüche 1 bis 5, **dadurch gekennzeichnet, dass** die Agglomeratpartikel einen Staubwert von weniger als 3, vorzugsweise weniger als 2 aufweisen.

7. Verfahren nach einem der Ansprüche 1 bis 6, **dadurch gekennzeichnet, dass** das Schüttgewicht der Agglomeratpartikel mehr als 300 g/l beträgt.

8. Verfahren nach einem der Ansprüche 1 bis 7, **dadurch gekennzeichnet, dass** die Fließfähigkeit der Agglomeratpartikel kleiner als 14 ist.

9. Verfahren nach einem der Ansprüche 1 bis 8, **dadurch gekennzeichnet, dass** die Agglomeratpartikel in einer rieselfähigen nicht staubenden Form vorliegen.

10. Agglomerationspartikel erhältlich nach einem Verfahren nach dem der Ansprüche 1 bis 9, **dadurch gekennzeichnet, dass** es sich um Aromapartikel handelt.

11. Verwendung der Agglomeratpartikel erhältlich nach dem Verfahren nach einem der Ansprüche 1 bis 9, zur Herstellung von Futtermittel, Nahrungs- bzw. Lebensmittelprodukten.

## Claims

1. A method for producing agglomerate particles having a mean size between 300 µm and 1.000 µm, said method comprising the steps of:
(i) producing pulverulent particles by means of a spray-drying process, in a spray-drying agglomeration device having a spray-drying segment (A) in the upper region of a chamber for drying feed liquid sprayed by a feed liquid atomizer (Z1),
(ii) spraying the pulverulent particles with a binder liquid, in an integrated fluidized bed (B) in the spray-drying agglomeration device, which bed is situated in the lower region of chamber, in which region the powder of the spray-drying segment from step (i) is sprayed with a binder liquid by means of a nozzle or atomizer construction (Z2) mounted at the bottom of the fluidized bed (B),
the particles being constantly kept in motion and whirled up during production.

2. The method of claim 2, wherein the nozzle or atomizer construction (Z2) in the internal fluidized bed (B) consists of a ring line, **characterized in that** the nozzles or atomizers being evenly spaced along the ring line, the nozzle or atomizer construction (Z2) comprising at least 3 nozzles or atomizers and the nozzle or atomizer being a twin-fluid spray nozzle and the binder liquid from the nozzle or atomizer construction (Z2) in the internal fluidized bed being sprayed from the bottom to the top.

3. The method of claim 1 or 2, wherein the spray-drying agglomeration device comprises a dam construction (G) which is integrated in the fluidized bed (B) and which is placed in front of the escape opening (H) to the zigzag classifier.

4. The method of one of claims 1 to 3, wherein the fine dust in the device that arises as a result of abrasion is returned to the headspace of the spray tower by the zigzag classifier or an external fluidized bed.

5. The method of one of claims 1 to 4, wherein the spray-drying agglomeration device comprises a dam construction (G) which is integrated in the fluidized bed (B) and which is placed in front of the escape opening (H) to the zigzag classifier or an external fluidized bed.

6. The method of one of claims 1 to 5, wherein the agglomerate particles have a dust value of less than 3, preferably less than 2.

7. The method of one of claims 1 to 6, wherein the agglomerate particles have a bulk weight of greater than 300 g/l.

8. The method of one of claims 1 to 7, wherein the agglomerate particles have a flowability of less than 14.

9. The method of one of claims 1 to 8 wherein the agglomerate particles are present in a freeflowing, non-dust-raising form.

10. Agglomerate particles produced by a method according to one of claims 1 to 9, wherein the agglomerate particled are flavouring particles.

11. Use of agglomerate particled produced ba a method according to one of claims 1 to 9 for producing feedstuff, food or foodstuff.

## Revendications

1. Procédé de fabrication de particules d'agglomérat ayant une taille moyenne comprise entre 300 µm et 1000 µm, comprenant les étapes suivantes :
(i) la fabrication de particules pulvérulentes par un séchage par pulvérisation, dans un dispositif de séchage par pulvérisation et d'agglomération comprenant une section de séchage par pulvérisation (A) dans la zone supérieure d'une chambre pour le séchage d'un liquide d'alimentation, qui est pulvérisé par un vaporisateur de liquide d'alimentation (Z1),
(ii) la pulvérisation des particules pulvérulentes avec un liquide liant, dans un lit fluidisé intégré (B) dans le dispositif de séchage par pulvérisation et d'agglomération, qui se trouve dans la zone inférieure d'une chambre, dans laquelle la poudre issue de la section de séchage par pulvérisation de l'étape (i) est pulvérisée avec un liquide liant au moyen d'une construction de buses ou de vaporisateurs (Z2), qui est disposée en dessous du lit fluidisé (B),
les particules étant maintenues en mouvement permanent pendant la fabrication et mises en tourbillon.

2. Procédé selon la revendication 1, la construction de buses ou de vaporisateurs (Z2) dans le lit fluidisé interne (B) étant constituée par une conduite annulaire, **caractérisé en ce que** des buses ou des vaporisateurs sont placés le long de la conduite annulaire à intervalles réguliers, la construction de buses ou de vaporisateurs (Z2) comprenant au moins 3 buses ou vaporisateurs, et consistant en une buse de pulvérisation à deux fluides, et le liquide liant étant pulvérisé depuis la construction de buses ou de vaporisateurs (Z2) dans le lit fluidisé interne du bas vers le haut.

3. Procédé selon la revendication 1 ou 2, **caractérisé en ce que** le dispositif de séchage par pulvérisation et d'agglomération comprend une construction de barrage (G), qui est intégrée dans le lit fluidisé (B) et placée avant l'ouverture de sortie (H) vers le séparateur en zigzag.

4. Procédé selon l'une quelconque des revendications 1 à 3, **caractérisé en ce que** la poussière fine formée par abrasion dans le dispositif est recyclée par le séparateur en zigzag ou un lit fluidisé externe dans l'espace de tête de la tour de pulvérisation.

5. Procédé selon l'une quelconque des revendications 1 à 4, **caractérisé en ce que** le dispositif de séchage par pulvérisation et d'agglomération comprend une construction de barrage (G), qui est intégrée dans le lit fluidisé (B) et qui est placée avant l'ouverture de sortie (H) vers le séparateur en zigzag ou un lit fluidisé externe.

6. Procédé selon l'une quelconque des revendications 1 à 5, **caractérisé en ce que** les particules d'agglomérat présentent une valeur d'émission de poussière inférieure à 3, de préférence inférieure à 2.

7. Procédé selon l'une quelconque des revendications 1 à 6, **caractérisé en ce que** la densité apparente des particules d'agglomérat est supérieure à 300 g/l.

8. Procédé selon l'une quelconque des revendications 1 à 7, **caractérisé en ce que** la fluidité des particules d'agglomérat est inférieure à 14.

9. Procédé selon l'une quelconque des revendications 1 à 8, **caractérisé en ce que** les particules d'agglomérat se présentent sous une forme fluide ne dégageant pas de poussière.

10. Particules d'agglomérat pouvant être obtenues par un procédé selon l'une quelconque des revendications 1 à 9, **caractérisées en ce qu'**il s'agit de particules d'arômes.

11. Utilisation des particules d'agglomérat pouvant être obtenues par le procédé selon l'une quelconque des revendications 1 à 9 pour la fabrication de fourrages, d'aliments ou de produits alimentaires.
